# EUROPÄISCHE PATENTSCHRIFT

(11) **EP 1 309 794 B1**
(45) Veröffentlichungstag und Bekanntmachung des Hinweises auf die Patenterteilung: **16.08.2006**
(21) Anmeldenummer: 01962602.7
(22) Anmeldetag: 03.08.2001
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 10.08.2000 DE 10039076
(43) Veröffentlichungstag der Anmeldung: 14.05.2003
(73) Patentinhaber: ROBERT BOSCH GMBH, 70442 Stuttgart (DE)
(72) Erfinder: REITER, Ferdinand, 71706 Markgroeningen (DE)
(86) Internationale Anmeldenummer: PCT/DE2001/002968
(87) Internationale Veröffentlichungsnummer: WO 2002/012713

(56) Entgegenhaltungen:
- US-A- 4 660 011
- US-A- 5 407 131
- US-A- 5 494 219
- US-A- 5 887 799

## Beschreibung

### Stand der Technik

Die Erfindung geht aus von einem Brennstoffeinspritzventil nach der Gattung des Anspruchs 1.

Zur magnetischen Drosselung zwischen den Polen eines elektromagnetisch betätigbaren Brennstoffeinspritzventils wird gewöhnlich je nach Bauart des Brennstoffeinspritzventils entweder ein nichtmagnetisches Zwischenteil eingesetzt oder der Sitzträger bzw. das Ventilgehäuse mit einem dünnwandigen Kragen als Drossel ausgestattet. In der Drosselstelle geht dadurch, daß das Material mit geringer Wandstärke vorliegt, der Magnetkreis bei kleinem Flußanteil schnell in Sättigung.

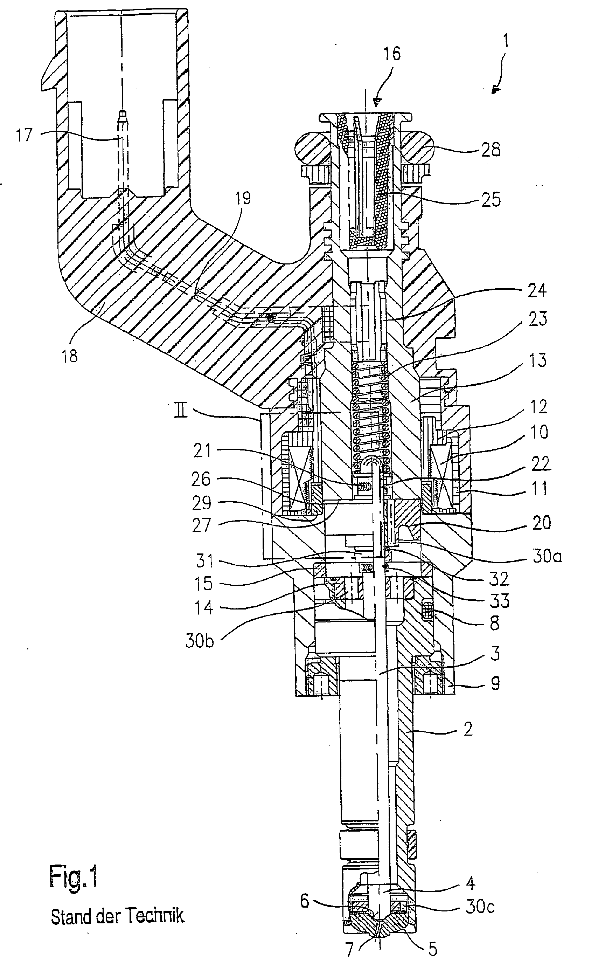

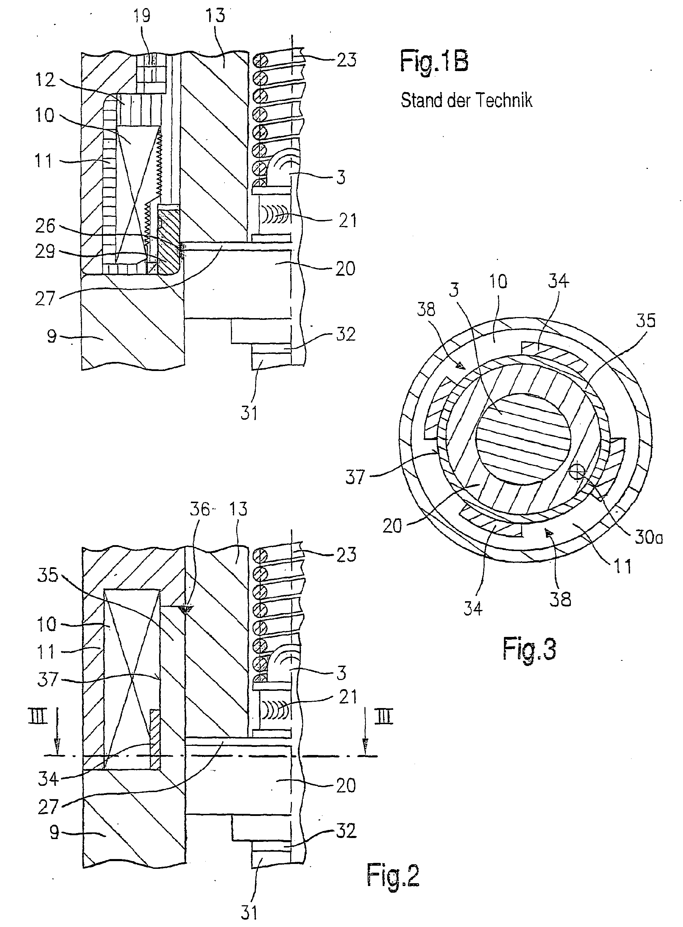

Zum Betrieb von Hochdruck-Brennstoffeinspritzventilen wird zur mechanischen Verstärkung der so entstandenen mechanischen Schwachstelle ein Verbindungselement oder ein Stützring umfänglich um die Drosselstelle angebracht (siehe Fig. 1B).

Beispielsweise ist aus der DE 195 03 821 A1 ein Brennstoffeinspritzventil bekannt, bei welchem die Anzahl der Bauteile des Ventilrohrs verringert ist, so daß auch die Anzahl der Füge- und Verbindungsstellen vermindert ist. Das gesamte Ventilrohr ist aus magnetisch leitendem Material hergestellt, so daß auf nichtmagnetische Zwischenteile verzichtet werden kann. Zwischen dem Kern und dem Ventilsitzträger ist dabei eine dünnwandige Drosselstelle ausgebildet.

Nachteilig bei den oben genannten Brennstoffeinspritzventilen ist insbesondere die mechanische Schwächung des Ventilgehäuses bzw. des Sitzträgers an der Stelle der magnetischen Drossel. Da die Brennstoffeinspritzventile vornehmlich zum direkten Einspritzen von Brennstoff in den Brennraum von fremdgezündeten gemischverdichtenden Brennkraftmaschinen ausgelegt sind, herrschen sowohl im Brennraum als auch im Brennstoffeinspritzventil hohe Drücke, die zu einer Beschädigung des Brennstoffeinspritzventils während des Betriebs führen können.

Die normalerweise zur Verstärkung des Gehäuses verwendeten Verbindungsbauteile haben den Nachteil, daß sie unabhängig vom Innenpol und Außenpol aus einem nicht ferritischen Material gefertigt werden müssen. Die Montage der Verbindungsbauteile kann zudem ebenfalls zu Beschädigungen des an dieser Stelle schwachen Gehäuses führen.

Aus der US 4,660,011 A ist bereits ein Elektromagnet bekannt, der zur Steuerung eines Brennstoffeinspritzventils für Brennstoffeinspritzanlagen von Brennkraftmaschinen dient. Der Elektromagnet umfasst einen Innenkern aus weichmagnetischem Material, der von einer Magnetspule umschlossen ist. Um die Magnetspule ist zumindest teilweise ein Außenkern angeordnet, der einen Außenpol aufweist, welcher mit einem Innenpol des Innenkerns in einer Ebene liegt. Einerseits der Magnetspule ist zwischen dem Innenkern und dem Außenkern ein erster ringförmig ausgebildeter und radial magnetisierter Permanentmagnet und andererseits der Magnetspule ein zweiter ringförmig ausgebildeter und ebenfalls radial magnetisierter Permanentmagnet angeordnet. Den Polen zugewandt ist ein Anker vorgesehen, der einerseits mit einer Ventilnadel verbunden ist, die einen mit einem Ventilsitz zusammenwirkenden Ventilschließkörper aufweist, und andererseits mit dem Außenpol einen ersten Arbeitsluftspalt und mit dem Innenpol einen zweiten Arbeitsluftspalt bildet. Die Permanentmagnete sind derart gepolt, dass ihre Magnetfelder an den Arbeitsluftspalten dem durch die Magnetspule induzierten Elektromagnetfeld entgegen verlaufen.

### Vorteile der Erfindung

Das erfindungsgemäße Brennstoffeinspritzventil mit den Merkmalen des Anspruchs 1 hat demgegenüber den Vorteil, daß die magnetische Drosselung durch das Anbringen von Permanentmagneten an dem in normaler Stärke angefertigten Verbindungsbereich, zwischen Innenpol und Außenpol des Brennstoffeinspritzventils erzielt wird. Die Permanentmagnete erzeugen in dem ferritischen Material des Außenpols einen Primärfluß, welcher für den durch die Magnetspule erzeugten Sekundärfluß nur noch einen reduzierten Querschnitt zur Verfügung stellt.

Durch die in den abhängigen Ansprüchen aufgeführten Maßnahmen sind vorteilhafte Weiterentwicklungen des im Anspruch 1 angegebenen Brennstoffeinspritzventils möglich.

Von Vorteil ist die Möglichkeit, die Anzahl und die Abstände der Permanentmagnete beliebig zu wählen. Besonders einfach herstellbar und leicht montierbar ist dabei ein einzelner, ringförmiger Permanentmagnet.

Von Vorteil sind auch die verschiedenen Möglichkeiten der Befestigung der Permanentmagnete am Außenpol. Besonders vorteilhaft und einfach ist dabei die Befestigung durch die Magnetkraft der Permanentmagnete.

Durch das Umspritzen der montierten Permanentmagnete mit einer Kunststoffhülle kann ein sicherer Sitz am Gehäuse erreicht werden.

Vorteilhafterweise sind die Permanentmagnete in Form von Kreisringsegmenten ausgebildet, die durch einen passend gewählten Krümmungsradius am Gehäuse anliegen.

Von Vorteil ist insbesondere die Möglichkeit, die Eigenschaften des Brennstoffeinspritzventils durch das gezielte Aufmagnetisieren der Permanentmagnete nach der Montage zu beeinflussen.

Als Material zur Herstellung der Permanentmagnete sind insbesondere Stoffe mit hohem Energieinhalt von Vorteil, wie z. B. Eisen-Neodym-Bor oder Verbindungen aus Kobalt mit Seltenerdmetallen.

### Zeichnung

Ein Ausführungsbeispiel der Erfindung ist in der Zeichnung vereinfacht dargestellt und in der nachfolgenden Beschreibung näher erläutert. Es zeigen:
- Fig. 1A: einen schematischen Schnitt durch ein Beispiel eines Brennstoffeinspritzventils gemäß dem Stand der Technik,
- Fig. 1B: einen vergrößerten schematischen. Ausschnitt im Bereich II in Fig. 1A,
- Fig. 2: einen Längsschnitt durch ein Ausführungsbeispiel eines erfindungsgemäßen Brennstoff einspritzventils im gleichen Bereich II wie Fig. 1B, und
- Fig. 3: einen Schnitt durch das- in Fig. 2 dargestellte Ausführungsbeispiel des erfindungsgemäßen Brennstoffeinspritzventils entlang der Linie III-III in Fig. 2.

### Beschreibung des Ausführungsbeispiels

Bevor anhand der Fig. 2 und 3 ein Ausführungsbeispiel, eines erfindungsgemäßen Brennstoffeinspritzventils 1 näher beschrieben wird, soll zum besseren Verständnis der Erfindung zunächst anhand von Fig. 1 ein abgesehen von den erfindungsgemäßen Maßnahmen baugleiches Brennstoffeinspritzventil gemäß dem Stand der Technik bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht in Wirkverbindung mit einem Ventilschließkörper 4, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch eine Verengung 26 voneinander getrennt und sind miteinander durch ein nicht ferromagnetisches Verbindungsbauteil 29 verbunden. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelfuhrung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird. In der Ventilnadelführung 14, im Anker 20 und am Ventilsitzkörper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen eine nicht weiter dargestellte Brennstoffleitung abgedichtet.

An der abspritzseitigen Seite des Ankers 20 ist ein ringförmiges Dämpfungselement 32, welches aus einem Elastomerwerkstoff besteht, angeordnet. Es liegt auf einem zweiten Flansch 31 auf, welcher über eine Schweißnaht- 33 kraftschlüssig mit der Ventilnadel 3 verbunden ist.

Im Ruhezustand des Brennstoffeinspritzventila 1 wird der Anker 20 von der Rückstellfeder . 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den ersten Flansch 21, welcher mit der Ventilnadel 3 verschweißt ist, ebenfalls in Hubrichtung mit. Der mit der Ventilnadel 3 in Verbindung stehende Ventilschließkörper 4 hebt von der Ventilsitzfläche 6 ab und der über die Brennstoffkanäle 30a bis 30c geführte Brennstoff wird durch die Abspritzöffnung 7 abgespritzt.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Verbindung stehende erste Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird.

Fig. 1B zeigt in einer auszugsweisen Schnittdarstellung eine vergrößerte Ansicht des Bereichs II in Fig. LA.

Die Verengung 26 , zwischen dem Innenpol 13 und dem Außenpol 9, welche als magnetische Drossel wirkt, ist eine potentielle mechanische Schwachstelle des Brennstoffeinspritzventils 1. Da das Brennstoffeinspritzventil 1 unter Hochdruck betrieben wird, ist es üblich, die Verengung 26 durch das Verbindungsbauteil 29 zu verstärken, damit das Brennstoffeinspritzventil 1 nicht während des Betriebes durch den im Inneren herrschenden Hochdruck verformt oder zerstört wird.

Das Verbindungsbauteil 29 ist meist ringförmig ausgebildet und umschließt den Innenpol 13 im Bereich der Verengung 26, um das Brennstoffeinspritzventil 1 zu stabilisieren. Damit die Verengung 26 nicht ihre. Wirkung als magnetische Drossel verliert, muß das Verbindungsbauteil 29 aus einem Material bestehen, welches nicht ferritisch ist.

Die Herstellung und Montage eines solchen Verbindungsbauteils 29 ist mit zusätzlichen Kosten und Aufwand verbunden, außerdem kann die mechanische Schwachstelle an der Verengung 26 bei der Montage des Verbindungsbauteils 29 beschädigt werden.

Fig. 2 zeigt in einer auszugsweisen Schnittdarstellung im gleichen Bereich wie Fig. 1B ein Ausführungsbeispiel eines erfindungsgemäßen Brennstoffeinspritzventils 1. Übereinstimmende Bauteile sind mit gleichen Bezugszeichen versehen, um die Orientierung zu erleichtern.

Das erfindungsgemäße Brennstoffeinspritzventil 1 weist einen ähnlichen Aufbau auf wie das in Fig. 1A beschriebene Brennstoffeinspritzventil, so daß die nachfolgende Beschreibung sich auf die wesentlichen Merkmale beschränkt.

Das im vorliegenden Ausführungsbeispiel dargestellte Brennstoffeinspritzventil 1 weist statt einer Verengung 26 zwischen dem Innenpol 13 und dem Außenpol 9 eine rohrförmige Verlängerung 35 des Außenpols 9 auf, welche über eine Schweißnaht 36 mit dem Innenpol 13 verbunden ist. Der Innenpol 13 und der Anker 20 durchgreifen die rohrförmige Verlängerung 35 des Außenpols 9. An einer radial gesehen äußeren Seite 37 der rohrförmigen Verlängerung 35 sind Permanentmagnete 34 angebracht. Die Permanentmagnete 34 erstrecken sich dabei in axialer Richtung von einem Bereich des Außenpols 9, in welchem der Anker 20 geführt ist, über den Arbeitsspalt 27 bis zum Innenpol 13, der in der rohrförmigen Verlängerung 35 des Außenpols 9 angeordnet ist.

Durch die Anordnung der Permanentmagnete 34 an der äußeren Seite 37 des Außenpols 9 wird ein .Drosseleffekt erzielt, welcher durch das Gegeneinanderwirken des Magnetfeldes der Permanentmagnete 34 und des durch die Magnetspule 10 erzeugten Magnetfeldes hervorgerufen wird. Die Permanentmagnete 34 erzeugen dabei im Material der an den Permanentmagneten.34 anliegenden rohrförmigen Verlängerung 35 des Außenpols 9 einen lokal begrenzten magnetischen Fluß, welcher einen bestimmten Querschnitt beansprucht. Dadurch steht bei Bestromen der Magnetspule 10 zur Betätigung des Brennstoffeinspritzventils 1 für den Sekundärfluß nur noch ein reduzierter Querschnitt zur Verfügung, der ähnlich der Verengung 26 zwischen dem Innenpol 13 und dem Außenpol 9 bei dem in Fig. 1A und 1B beschriebenen Brennstoffeinspritzventil 1 gemäß dem Stand der Technik schnell in Sättigung geht und daher als magnetische Drossel wirkt. Eine mechanische Schwachstelle liegt dann nicht mehr vor.

Als Material zur Herstellung der Permanentmagnete sind Stoffe mit hohem Energieinhalt wie z. B. Eisen-Neodym-Bor oder Verbindungen aus Kobalt mit Seltenerdmetallen geeignet.

Die Polung der Permanentmagnete 34 kann dabei gleichsinnig oder gegensinnig zu der des durch die Magnetspule 10 erzeugten Magnetfeldes sein. Die Magnetisierung der Permanentmagnete 34 kann sowohl vor der Montage am Brennstoffeinspritzventil 1 als auch nach der Montage erfolgen.

Dabei sind verschiedene Varianten bezüglich der Form und Anzahl der Permanentmagnete 34 denkbar. Im einfachsten Fall kann der Permanentmagnet 34 als geschlossener Ring ausgebildet sein, der auf die rohrförmige Verlängerung 35 des Außenpols 9 aufgesteckt wird. Danach kann die vorgefertigte Magnetspule 10 aufgesetzt werden.

Zur Material- und damit Gewichtsersparnis kann der Ring in mehrere einzelne Permanentmagii-ete 34 aufgeteilt sein, welche die Form von Kreisringsegmenten aufweisen, die den gleichen Krümmungsradius wie die rohrförmige Verlängerung 35 des Außenpols 9 haben. Die Anzahl der Permanentmagnete 34 ist dabei nahezu beliebig, sollte aber aus Gründen der. Symmetrie eine gewisse Mindestanzahl, beispielsweise vier, nicht unterschreiten. Auch eine quadersegmentartige Form ist denkbar.

Damit insbesondere die quader- und kreisringsegmentförrnigen. Permanentmagnete 34 an der richtigen Stelle des Außenpols bleiben, sind verschiedene Befestigungsmöglichkeiten denkbar.

Zum einen können die Permanentmagnete 34 bedingt durch das ferritische Material des Außenpols 9 direkt durch ihre Magnetkraft an diesem gehalten werden. Zum anderen können Klebeverbindungen wie direktes Kleben oder die Befestigung mit doppelseitigem Klebeband angewandt werden. Auch ein Umspritzen der magnetisch auf dem Außenpol 9 haftenden Permanentmagnete 34 mit Kunststoff zur besseren Sicherung ist möglich.

In Fig. 3 ist stellvertretend für die oben beschriebenen Ausführungsvarianten das in Fig. 2 beschriebene Ausführungsbeispiel eines erfindungsgemäßen Brennstoffeinspritzventils 1 anhand eines schematischen Schnittes entlang der Linie III-III in Fig. 2 näher dargestellt.

Auf der Ventilnadel 3 ist der Anker 20 angeordnet, der mit wenigstens einer Bohrung 30a für den Brennstoff versehen ist. Der Anker 20 ist in der rohrförmigen Verlängerung 35 des Außenpols 9 geführt. An der Außenseite 37 der rohrförmigen Verlängerung 35 liegen im vorliegenden Ausführungsbeispiel vier kreisringsegmentförmige Permanentmagnete 34 an, welche durch ebenso viele Ausnehmungen 38 voneinander getrennt sind. Dabei nehmen die Permanentmagnete 34 und die dazwischenliegenden Ausnehmungen 38 in etwa gleiche Winkelausschnitte von jeweils ca. 45° ein. Die Magnetspule 10 ist radiaL außen an den Permanentmagneten 34 angeordnet und durch das Spulengehäuse 11 nach außen abgeschlossen.

Die Permanentmagnete 34 bieten zusätzlich zu dem Drosseleffekt auch die Möglichkeit, bei fertig montiertem Brennstoffeinspritzventil 1 durch eine entsprechende Magnetisierung die Eigenschaften des Brennstoffeinspritzventils 1 gezielt zu verändern. Dabei kann insbesondere Einfluß auf die Einstellung der dynamischen. Durchflußmenge des Brennstoffs durch das Brennstoffeinspritzventil 1 genommen werden.

Die Erfindung ist nicht auf die dargestellten Ausführungsbeispiele beschränkt und auch für beliebige andere Bauarten von Brennstoffeinspritzventilen, z. B. für nach außen öffnende Brennstoffeinspritzventile, oder für andere Ankerformen, z. B. Flachanker, anwendbar.

## Patentansprüche

1. Brennstoffeinspritzventil (1), insbesondere Einspritzventil zum direkten Einspritzen von Brennstoff in einen Brennraum einer fremdgezündeten, gemischverdichtenden Brennkraftmaschine, mit einer Magnetspule (10), die mit einem Anker (20) zusammenwirkt, und mit einem magnetischen Innenpol (13) und einem magnetischen Außenpol (9), wobei der Anker (20) zur Betätigung des Brennstoffeinspritzventils (1) kraftschlüssig mit einer Ventilnadel (3) in Verbindung steht, welche an ihrem abspritzseitigen Ende einen Ventilschließkörper (4) aufweist, der mit einem Ventilsitz (6) zusammenwirkt,
**dadurch gekennzeichnet,**
**daß** an einem Verbindungsbereich des Innenpols (13) mit dem Außenpol (9) mindestens ein Permanentmagnet (34) angeordnet ist.

2. Brennstoffeinspritzventil nach Anspruch 1,
**dadurch gekennzeichnet,**
**daß** der Permanentmagnet (34) als zylindrischer Ring ausgebildet und an dem Außenpol (9) angeordnet ist.

3. Brennstoffeinspritzventil nach Anspruch 1,
**dadurch gekennzeichnet,**
**daß** mehrere kreisringsegmentförmig ausgebildete Permanentmagnete (34) umfänglich an dem Außenpol (9) angeordnet sind.

4. Brennstoffeinspritzventil nach Anspruch 1,
**dadurch gekennzeichnet,**
**daß** mehrere quadersegmentförmig ausgebildete Permanentmagnete (34) umfänglich an dem Außenpol (9) angeordnet sind.

5. Brennstoffeinspritzventil nach einem der Ansprüche 1 bis 4,
**dadurch gekennzeichnet,**
**daß** der Außenpol (9) der Magnetspule (10) eine rohrförmige Verlängerung (35) in Richtung zum Innenpol (13) aufweist.

6. Brennstoffeinspritzventil nach Anspruch 5,
**dadurch gekennzeichnet,**
**daß** die rohrförmige Verlängerung (35) den Anker (20) und den Innenpol (13) umgreift.

7. Brennstoffeinspritzventil nach Anspruch 6,
**dadurch gekennzeichnet,**
**daß** der zumindest eine Permanentmagnet (34) an einer äußeren Seite (37) der rohrförmigen Verlängerung (35) anliegt.

8. Brennstoffeinspritzventil nach einem der Ansprüche 5 bis 7,
**dadurch gekennzeichnet,**
**daß** der zumindest eine Permanentmagnet (34) durch seine Magnetkraft an einer äußeren Seite (37) der rohrförmigen Verlängerung (35) fixiert ist.

9. Brennstoffeinspritzventil nach einem der Ansprüche 5 bis 7,
**dadurch gekennzeichnet,**
**daß** der zumindest eine Permanentmagnet (34) durch Kleben an einer äußeren Seite (37) der rohrförmigen Verlängerung (35) fixiert ist.

10. Brennstoffeinspritzventil nach Anspruch 9,
**dadurch gekennzeichnet,**
**daß** der zumindest eine Permanentmagnet (34) durch doppelseitiges Klebeband an der äußeren Seite (37) der rohrförmigen Verlängerung (35) fixiert ist.

11. Brennstoffeinspritzventil nach Anspruch 9,
**dadurch gekennzeichnet**,
da der zumindest eine Permanentmagnet (34) direkt an die äußere Seite (37) der rohrförmigen Verlängerung (35) geklebt ist.

12. Brennstoffeinspritzventil nach einem der Ansprüche 5 bis 7,
**dadurch gekennzeichnet,**
**daß** der zumindest eine Permanentmagnet (34) durch das Umspritzen mit Kunststoff an einer äußeren Seite (37) der rohrförmigen Verlängerung (35) fixiert ist.

13. Brennstoffeinspritzventil nach einem der Ansprüche 1 bis 12,
**dadurch gekennzeichnet,**
**daß** jeder Permanentmagnet (34) vor der Montage magnetisiert wird.

14. Brennstoffeinspritzventil nach einem der Ansprüche 1 bis 13,
**dadurch gekennzeichnet,**
**daß** jeder Permanentmagnet (34) aus einer Neodym-Eisen-BorVerbindung besteht.

15. Brennstoffeinspritzventil nach einem der Ansprüche 1 bis 13,
**dadurch gekennzeichnet,**
**daß** jeder Permanentmagnet (34) aus einer Seltenerd-Kobalt-Verbindung besteht.

## Claims

1. Fuel injection valve (1), in particular injection valve for the direct injection of fuel into a combustion space of a spark-ignition mixture-compressive internal combustion engine, with a magnet coil (10) which cooperates with an armature (20), and with a magnetic internal pole (13) and a magnetic external pole (9), the armature (20) being non-positively connected, for the actuation of the fuel injection valve (1), to a valve needle (3) which, at its injection-side end, has a valve-closing body (4) which cooperates with a valve seat (6), **characterized in that** at least one permanent magnet (34) is arranged at a region of connection of the internal pole (13) to the external pole (9).

2. Fuel injection valve according to Claim 1, **characterized in that** the permanent magnet (34) is designed as a cylindrical ring and is arranged on the external pole (9).

3. Fuel injection valve according to Claim 1, **characterized in that** a plurality of permanent magnets (34) designed in the form of an annular segment are arranged circumferentially on the external pole (9).

4. Fuel injection valve according to Claim 1, **characterized in that** a plurality of permanent magnets (34) designed in the form of a parallelepipedal segment are arranged circumferentially on the external pole (9).

5. Fuel injection valve according to one of Claims 1 to 4, **characterized in that** the external pole (9) of the magnet coil (10) has a tubular prolongation (35) in the direction of the internal pole (13).

6. Fuel injection valve according to Claim 5, **characterized in that** the tubular prolongation (35) surrounds the armature (20) and the internal pole (13).

7. Fuel injection valve according to Claim 6, **characterized in that** the at least one permanent magnet (34) bears against an outer side (37) of the tubular prolongation (35).

8. Fuel injection valve according to one of Claims 5 to 7, **characterized in that** the at least one permanent magnet (34) is fixed by means of its magnetic force to an outer side (37) of the tubular prolongation (35).

9. Fuel injection valve according to one of Claims 5 to 7, **characterized in that** the at least one permanent magnet (34) is fixed by adhesive bonding to an outer side (37) of the tubular prolongation (35).

10. Fuel injection valve according to Claim 9, **characterized in that** the at least one permanent magnet (34) is fixed by means of a double-sided adhesive tape to the outer side (37) of the tubular prolongation (35).

11. Fuel injection valve according to Claim 9, **characterized in that** the at least one permanent magnet (34) is adhesively bonded directly to the outer side (37) of the tubular prolongation (35) .

12. Fuel injection valve according to one of Claims 5 to 7, **characterized in that** the at least one permanent magnet (34) is fixed to an outer side (37) of the tubular prolongation (35) by being injection-moulded around with plastic.

13. Fuel injection valve according to one of Claims 1 to 12, **characterized in that** each permanent magnet (34) is magnetized before mounting.

14. Fuel injection valve according to one of Claims 1 to 13, **characterized in that** each permanent magnet (34), consists of a neodymium/iron/boron compound.

15. Fuel injection valve according to one of Claims 1 to 13, **characterized in that** each permanent magnet (34) consists of a rare-earth/cobalt compound.

## Revendications

1. Injecteur de carburant (1), en particulier pour l'injection directe de carburant dans une chambre de combustion d'un moteur à combustion interne comprimant le mélange, à allumage commandé, avec une bobine magnétique (10) qui coopère avec un induit (20), et avec un pôle magnétique intérieur (13) et un pôle magnétique extérieur (9), dans laquelle l'induit (20), pour actionner l'injecteur de carburant (1), est en liaison de force avec une aiguille de soupape (3) qui présente à son extrémité côté injection un obturateur de soupape (4) coopèrant avec un siège de soupape (6),
**caractérisé par**
au moins un aimant permanent (34) sur une zone de liaison du pôle intérieur (13) avec le pôle extérieur (9).

2. Injecteur de carburant selon la revendication 1,
**caractérisé en ce que**
l'aimant permanent (34) est en forme d'anneau cylindrique et est monté sur le pôle extérieur (9).

3. Injecteur de carburant selon la revendication 1,
**caractérisé en ce que**
plusieurs aimants permanents (34) en forme de segment d'arc de cercle sont montés sur la périphérie du pôle extérieur (9).

4. Injecteur de carburant selon la revendication 1,
**caractérisé par**
plusieurs aimants permanents (34) en forme de segment de parallélépipède sur la périphérie du pôle extérieur (9).

5. Injecteur de carburant selon l'une des revendications 1 à 4,
**caractérisé en ce que**
le pôle extérieur (9) de la bobine magnétique (10) présente un prolongement de forme tubulaire (35) dans la direction du pôle intérieur (13).

6. Injecteur de carburant selon la revendication 5,
**caractérisé en ce que**
le prolongement de forme tubulaire (35) entoure l'induit (20) et le pôle intérieur (13).

7. Injecteur de carburant selon la revendication 6,
**caractérisé en ce que**
l'aimant permanent (34) s'appuie contre une face extérieure (37) du prolongement de forme tubulaire (35).

8. Injecteur de carburant selon l'une des revendications 5 à 7,
**caractérisé en ce que**
l'aimant permanent (34) est fixé par sa force magnétique sur une face extérieure (37) du prolongement de forme tubulaire (35).

9. Injecteur de carburant selon l'une des revendications 5 à 7,
**caractérisé en ce que**
l'aimant permanent (34) est fixé par collage sur une face extérieure (37) du prolongement de forme tubulaire (35).

10. Injecteur de carburant selon la revendication 9,
**caractérisé en ce que**
l'aimant permanent (34) est fixé par bande adhésive double face sur la face extérieure (37) du prolongement de forme tubulaire (35).

11. Injecteur de carburant selon la revendication 9,
**caractérisé en ce que**
l'aimant permanent (34) est collé directement sur la face extérieure (37) du prolongement de forme tubulaire (35).

12. Injecteur de carburant selon l'une des revendications 5 à 7,
**caractérisé en ce que**
l'aimant permanent (34) est fixé en étant entouré de matière plastique par injection sur une face extérieure (37) du prolongement de forme tubulaire (35).

13. Injecteur de carburant selon l'une des revendications 1 à 12,
**caractérisé en ce que**
chaque aimant permanent (34) est magnétisé avant le montage.

14. Injecteur de carburant selon l'une des revendications 1 à 13,
**caractérisé en ce que**
chaque aimant permanent (34) est constitué d'un composé de néodyme-fer-bore.

15. Injecteur de carburant selon l'une des revendications 1 à 13,
**caractérisé en ce que**
chaque aimant permanent (34) est constitué d'un composé de terre rare et cobalt.
